# EUROPÄISCHE PATENTSCHRIFT

(11) **EP 0 938 988 B1**
(45) Veröffentlichungstag und Bekanntmachung des Hinweises auf die Patenterteilung: **21.06.2006**
(21) Anmeldenummer: 99100484.7
(22) Anmeldetag: 12.01.1999
(51) Int. Cl.: B60G 15/06

(54) **Federabstützung**
Spring support
Support pour ressort

(30) Priorität: 26.02.1998 DE 19808021
(43) Veröffentlichungstag der Anmeldung: 01.09.1999
(73) Patentinhaber: Dr.Ing. h.c.F. Porsche Aktiengesellschaft, 70435 Stuttgart (DE)
(72) Erfinder: Rispeter, Siegfried, 74354 Besigheim (DE); Lauer, Jürgen, 70565 Stuttgart (DE)

(56) Entgegenhaltungen:
- DE-A- 4 129 644
- DE-A- 4 129 645
- DE-A- 19 632 183
- DE-U- 8 802 370
- GB-A- 2 283 711
- US-A- 3 892 397
- US-A- 4 771 996
- US-A- 5 326 084

## Beschreibung

Die Erfindung bezieht sich auf eine Federabstützung für ein Federbein eines Kraftfahrzeuges nach dem Oberbegriff des Anspruchs 1.

Die gattungsbildende DE 41 29 645 A1 zeigt eine Spurhebel - Federbeineinheit, bei der an einem Federteller zusätzlich ein Spurhebel aus einem Strangpressprofil angeordnet ist. Der Federteller und der Spurhebel sind in radialer wie auch in axialer Richtung (nach unten) der Federbeineinheit über Formschluss mit einem Außenrohr des Stoßdämpfers verbunden. Am Federteller ist hierzu ein topfförmiger Abschnitt vorgesehen, der an seinem Umfang mit Einprägungen versehen ist, die sich am Außenrohr abstützen.

Aus GB 2 283 711 A ist ein hydraulischer Dämpfer bekannt geworden, bei dem ein am Außenrohr des Federbeines befestigter Federteller eine ringförmige Federwindungsauflage umfaßt, die mit einem topfförmigen Aufnahmeteil für das Außenrohr über Rippen verbunden ist, welche sich sternförmig zum Aufnahmeteil hin erstrecken. Zwischen den Rippen sind dabei Freiräume gebildet.

Aus der DE 42 01 837 C1 ist ein Federbein bekannt, das eine am Schwingungsdämpfer gehaltene Lagereinheit für ein Gehänge eines Stabilisators aufweist.

Aufgabe der Erfindung ist es, eine Federabstützung für eine Spiralfeder an einem Federbein zu schaffen, die aus einem leichtgewichtigen einteiligen Gußteil besteht und zur Verwendung für ein linkes und ein rechtes Fahrzeugrad geeignet ist.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, daß der Federteller zwischen Rippen Aussparungen bzw. Freiräume aufweist, die eine Leichtgewichtigkeit begründen. Desweiteren ist durch ein topfförmiges Aufnahmeteil eine exakte Fixierung am Außenrohr des Federbeines möglich.

Zwischen dem topfförmigen Aufnahmeteil und einer randseitigen Federwindungsauflage, die ringförmig ausgebildet ist, erstrecken sich die Rippen. Diese sind etwa U-profilförmig ausgebildet, so daß hierdurch gegenüber Vollrippen ebenfalls Gewicht einsparbar ist.

Der Federteller weist in vorteilhafter Weise zur Verwendung für ein linkes und ein rechtes Fahrzeugrad nach unten weisende Anformungen auf, in denen Lagerungen für ein Stabilisator-Gehänge gebildet werden.

Damit bei der Verwendung einer Zusatzfeder eine Entlüftung am Aufnahmetopf stattfinden kann, sind in der obenseitigen Bodenwand des topfförmigen Aufnahmeteils Entlüftungskanäle vorgesehen.

Ein Ausführungsbeispiel der Erfindung ist in den Zeichnungen dargestellt und wird im folgenden näher beschrieben.
Es zeigt
- Fig. 1: eine Ansicht auf das Federbein mit verbundenem Federteller im Schnitt,

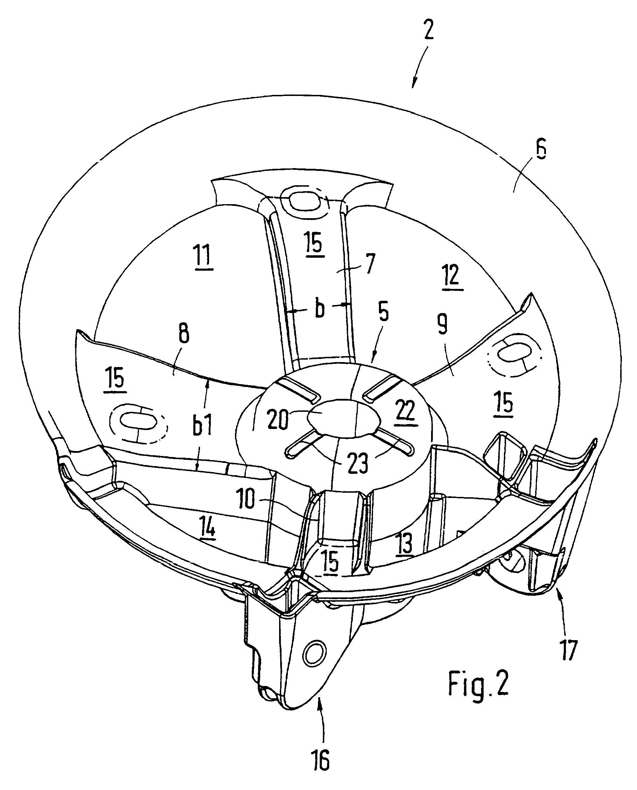

- Fig. 2: eine schaubildliche Darstellung des Federtellers schräg von oben,

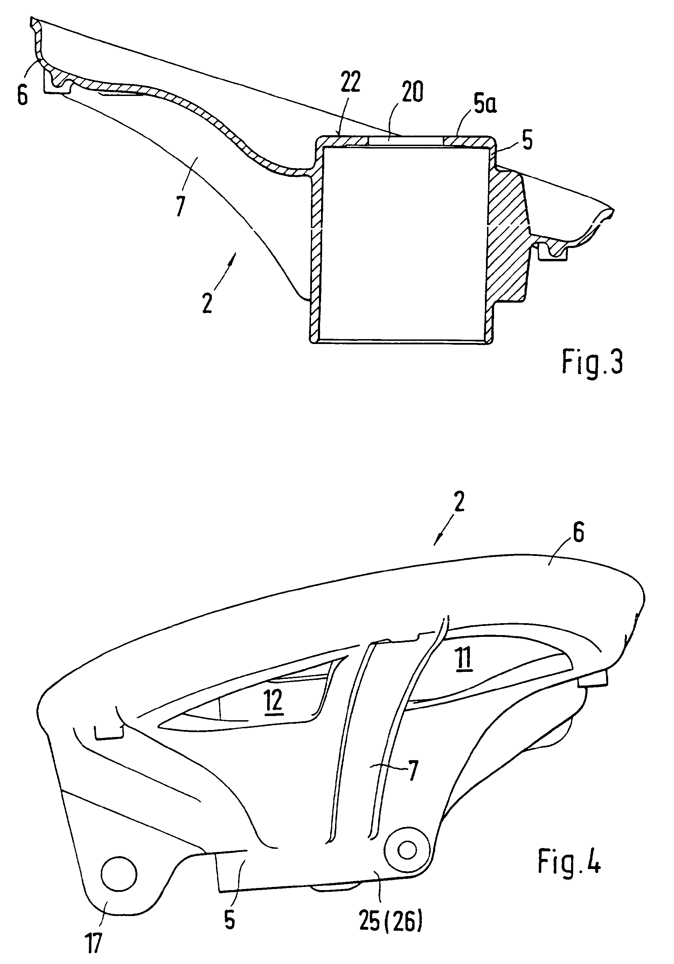

- Fig. 3: einen Schnitt durch den Federteller, und
- Fig. 4: eine schaubildliche Darstellung des Federtellers schräg von unten gesehen.

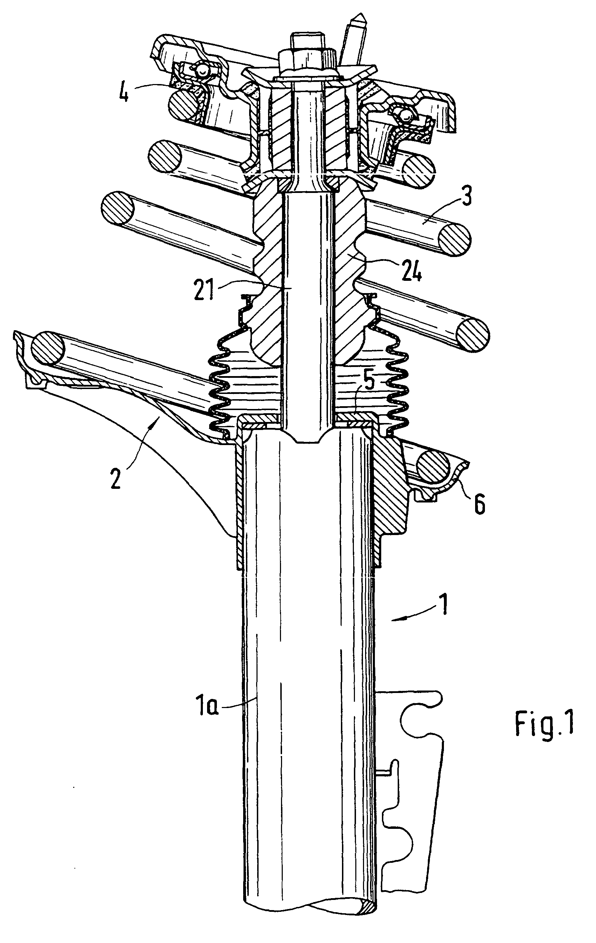

In Fig. 1 ist ein Federbein 1 mit einem verbundenen Federteller 2 gezeigt, an dem sich eine Spiralfeder 3 abstützt, die über einen weiteren oberen Federteller 4 zum Fahrzeugaufbau hin verbunden ist.

Der Federteller 2 umfaßt im wesentlichen ein topfförmiges Aufnahmeteil 5, zu welchem exzentrisch eine ringförmige Federwindungsauflage 6 angeordnet ist. Diese ist über mehrere radiale Rippen 7, 8, 9 und 10 mit dem topfförmigen Aufnahmeteil 5 verbunden.

Diese Rippen 7 bis 10 erstrecken sich sternförmig vom Aufnahmeteil 5 weg und sind entsprechend der aufzunehmenden Belastung mit einer unterschiedlichen Breite b, b₁ usw. versehen. Sie sind etwa U-profilförmig ausgeführt und bilden zwischen sich Freiräume 11, 12, 13 und 14.

Die Rippen 7 bis 10 weisen der Feder 3 zugerichtete Stege mit Flächen 15 auf, so daß sich bis auf die Freiräume eine annähernd geschlossene Fläche ergibt.

Unterseitig der ringförmigen Federwindungsauflage 6 sind Anformungen 16, 17 zur Bildung von Lagern zur Aufnahme von Stabilisator-Gehängen vorgesehen.

Der Federteller ist für ein linkes und ein rechtes Fahrzeugrad verwendbar, so daß die Anformung 16 beispielsweise für ein Stabilisator-Gehänge einer linken Fahrzeugseite und die Anformung 17 beispielsweise für ein Stabilisator-Gehänge einer rechten Fahrzeugseite dient.

Das topfförmige Aufnahmeteil 5 weist im obenliegenden Boden 5a eine Öffnung 20 zum Durchtritt einer Kolbenstange 21 des Federbeines 1 auf. In der Außenoberfläche 22 des Aufnahmeteils 5 sind Entlüftungskanäle 23 für eine Zusatzfeder 24 angeordnet.

Das Aufnahmeteil 5 weist beabstandete Schenkel 25, 26 auf, die zum Festsetzen am Außenrohr la des Federbeines 1 mit Bohrungen versehen sind, in die eine Befestigungsschraube eingesetzt wird.

## Patentansprüche

1. Federabstützung für ein Federbein (1) eines Kraftfahrzeuges, die einen Federteller (2) zur Abstützung einer Schraubenfeder (3) aufweist, mit einem am Federteller (2) angeordneten topfförmigen Aufnahmeteil (5) für ein Außenrohr (1a) des Federbeines (1), wobei der Federteller (2) randseitig eine ringförmige Federwindungsauflage (6) umfaßt, die mit dem topfförmigen Aufnahmeteil (5) über Rippen (7, 8, 9 und 10) verbunden ist, weiche sich sternformig zum Aufnahmeteil (5) hin erstrecken und die zwischenliegende Freiräume (11, 12, 13 und 14) aufweisen, **dadurch gekennzeichnet, daß** der Federteller (6) randseitig zwei nach unten gerichtete und beabstandet zueinander angeordnete Anformungen (16 und 17) aufweist, die jeweils Lagerungen für ein Stabilisator-Gehänge bilden.

2. Federabstützung nach Anspruch 1, **dadurch gekennzeichnet, daß** der Federteller (6) mit den beiden Lagerungen (16, 17) für ein Stabilisator-Gehänge eines linken und rechten Fahrzeugrades verwendbar ist.

3. Federabstützung nach einem der Ansprüche 1 oder 2, **dadurch gekennzeichnet, daß** die Rippen (7 bis 10) im Querschnitt etwa U-profilförmig ausgebildet sind und der Feder (3) zugerichtete Stege (15) aufweisen.

4. Federabstützung nach einem oder mehreren der vorhergehenden Ansprüche, **dadurch gekennzeichnet, daß** das topfförmige Aufnahmeteil (5) an seiner außenliegenden Bodenfläche (22) Entlüftungskanäle (23) für eine Zusatzfeder (24) aufweist.

## Claims

1. A spring support for a suspension strut (1) of a motor vehicle, comprising a spring plate (2) for supporting a helical spring (3), and a pot-shaped receptacle (5) arranged on the spring plate (2) and provided for an outer tube (1a) of the suspension strut (1), wherein the edge of the spring plate (2) has an annular spring-coil rest (6) connected to the pot-shaped receptacle (5) by ribs (7, 8, 9 and 10) which extend radially towards the receptacle (5) and have spaces (11, 12, 13 and 14) lying in between, **characterised in that** the edge of the spring plate (6) has two downwardly extending formations (16 and 17) which are arranged spaced apart and which form respective mountings for a stabiliser suspension.

2. A spring support according to claim 1, **characterised in that** the spring plate (6) with the two mountings (16, 17) is usable for a stabiliser suspension for a left and a right vehicle wheel.

3. A spring support according to either one of claims 1 and 2, **characterised in that** the ribs (7 to 10) are approximately U-shaped in cross-section and have webs (15) facing the spring (3).

4. A spring support according to one or more of the preceding claims, **characterised in that** the outer base surface (22) of the pot-shaped receptacle (5) has ventilation ducts (23) for a supplementary spring (24).

## Revendications

1. Support de ressort pour une jambe de force (1) d'un véhicule à moteur, qui comporte une coupelle de ressort (2) supportant un ressort hélicoïdal (3), avec une pièce de réception (5) en forme de godet disposée sur la coupelle de ressort (2) et destinée à recevoir un tube extérieur (1a) de la jambe de force (1), ladite coupelle de ressort (2) comprenant, du côté du bord, un support de spire de ressort (6) annulaire, lequel est relié à la pièce de réception (5) en forme de godet par l'intermédiaire de nervures (7, 8, 9 et 10), qui s'étendent en forme d'étoile vers la pièce de réception (5) et entre lesquelles des interstices (11, 12, 13 et 14) sont formés, **caractérisé en ce que**, du côté du bord la coupelle de ressort (6) comporte deux éléments en relief (16 et 17), orientés vers le bas et disposés à distance l'un de l'autre, qui constituent respectivement les paliers pour une suspension de barre stabilisatrice.

2. Support de ressort selon la revendication 1, **caractérisé en ce que** la coupelle de ressort (6) avec les deux paliers (16, 17) peut être utilisée pour une suspension de barre stabilisatrice d'une roue gauche et d'une roue droite de véhicule.

3. Support de ressort selon l'une des revendications 1 ou 2, **caractérisé en ce que** les nervures (7 à 10) ont une section sensiblement en forme de U et des branches (15) orientées vers le ressort (3).

4. Support de ressort selon une ou plusieurs des revendications précédentes, **caractérisé en ce que** la pièce de réception (5) en forme de godet comporte sur la surface extérieure de son fond (22) des canaux de ventilation (23) pour un ressort auxiliaire (24).
